(19) Europäisches Patentamt
European Patent Office
Office européen des brevets

(11) **EP 3 091 503 A1**

(12) **EUROPEAN PATENT APPLICATION**

(43) Date of publication:
**09.11.2016 Bulletin 2016/45**

(51) Int Cl.:
***G06T 5/00*** (2006.01)

(21) Application number: **15275130.1**

(22) Date of filing: **05.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **BAE Systems PLC**
**London SW1Y 5AD (GB)**

(72) Inventors:
- **JONES, Christopher Charles Rawlinson**
  **Preston, Lancashire PR4 1AX (GB)**
- **SMITH, Leanne**
  **Barrow, Cumbria LA14 1AF (GB)**

(74) Representative: **BAE SYSTEMS plc**
**Group IP Department**
**Farnborough Aerospace Centre**
**Farnborough**
**Hampshire GU14 6YU (GB)**

(54) **SIGNAL PROCESSING**

(57) Disclosed is a method of processing an input signal (20), for example an image comprising a plurality of pixels (22). The method comprises adding, to the input signal (20), a plurality of stochastic noise signals (24) so as to produce an output signal (28). The stochastic noise signals (24) may be pseudorandom signals that may be successively added to the input signal (20). The plurality of stochastic noise signals (24) may be generated by generating a pseudorandom initial stochastic signal having length equal to the length of the input signal (20) multiplied by an integer greater than or equal to two. The initial stochastic signal may then be segmented into a plurality of segments, the number of segments being equal to the integer, and the length of each segment being equal to the length of the input signal (20).

FIG. 5

**Description**

FIELD OF THE INVENTION

The present invention relates to processing signals.

BACKGROUND

Aircraft, for example unmanned air vehicles (UAVs), are commonly used to perform a variety of tasks. Such tasks include capturing images of areas of terrain for, for example, the purpose of performing a wide area search, performing a surveillance operation, etc.
Signal measured by an aircraft typically suffer unwanted modification often referred to as noise. Noise may be introduced into a signal, for example, during capture, storage, transmission, processing, and/or conversion.

SUMMARY OF THE INVENTION

In a first aspect, the present invention provides a method of processing an input signal. The method comprises adding, to the input signal, a plurality of stochastic noise signals so as to produce an output signal.
The method may further comprise measuring a parameter of a system, thereby providing the input signal.
The stochastic noise signals may be successively added to the input signal, i.e. one after the other.
The method may further comprise determining a value of a function of a signal to noise ratio of the input signal. The number of stochastic noise signals in the plurality may be equal to the determined value. For example, the number of stochastic noise signals may be inversely proportional to the signal to noise ratio of the input signal. For example, the higher the signal to noise ratio of the input signal, the fewer stochastic noise signals are added to the input signal.
One or more of the stochastic noise signals may be pseudorandom signals. For example, one or more of the pseudorandom signals may be based on an irrational number, such as $\pi$ or e.
The method may further comprise generating the plurality of stochastic noise signals.
Generating the plurality of stochastic noise signals may comprises generating a stochastic signal having a length greater than or equal to a length of the input signal multiplied by the number of stochastic noise signals in the plurality, and segmenting the stochastic signal into a plurality of segments, thereby providing the plurality of stochastic noise signals. For example, in some aspects the input signal has length N, and generating the plurality of stochastic noise signals comprises generating a stochastic signal having length C x N, (where C is an integer value, preferably 2 or greater), and segmenting that stochastic signal of length C x N into C segments, each segment having length N. The segments of length N may then be sequentially added to the length N input signal. In other words, the plurality of stochastic noise signals may be generated by generating a pseudorandom initial stochastic signal having length equal to the length of the input signal multiplied by an integer which is preferably greater than or equal to two. The initial stochastic signal may then be segmented into a plurality of segments. The number of segments may be equal to the integer value. The length of each segment may be equal to the length of the input signal.
One or more of the stochastic noise signals may be bipolar stochastic signals. One or more of the stochastic noise signals may have zero mean.
The input signal may comprise an image having a first plurality of pixels. Each stochastic noise signal may be an image comprising a second plurality of pixels. The number of pixels in the second plurality may be greater or equal to the number of pixels in the first plurality. Preferably, the number of pixels in the second plurality is equal to the number of pixels in the first plurality. Adding a stochastic noise signal to the input signal may comprise superimposing a noise image onto the input signal image. An image may be, for example, a camera image (e.g. a visible light, infrared, or ultraviolet image), or a range image (e.g. a LIDAR or radar images such as a ground penetrating radar image).
The input signal may comprise an image including image data from a plurality of independent channels. For example, the input signal may include image data from red (R), green (G), and blue (B) channels of one or more cameras. Adding a stochastic noise signal to the input signal may comprise, for a pixel in the image, adding a common noise value to each channel value of that pixel.
In a further aspect, the present invention provides apparatus for processing an input signal. The apparatus comprises a signal processor configured to add, to the input signal, a plurality of stochastic noise signals so as to produce an output signal.
In a further aspect, the present invention provides an aircraft comprising apparatus according to the receding aspect.
In a further aspect, the present invention provides a program or plurality of programs arranged such that when executed by a computer system or one or more processors it/they cause the computer system or the one or more processors to operate in accordance with the method of any preceding aspect.

In a further aspect, the present invention provides a machine readable storage medium storing a program or at least one of the plurality of programs according to the preceding aspect.

BRIEF DESCRIPTION OF THE DRAWINGS

Figure 1 is a schematic illustration (not to scale) of a scenario in which an aircraft implements an embodiment of a method of capturing and processing images;

Figure 2 is a schematic illustration (not to scale) of the aircraft;

Figure 3 is a process flow chart showing certain steps of a process in which the embodiment of the method of capturing and processing images is performed;

Figure 4 is a process flow chart showing certain steps of an example image processing method;

Figure 5 is a schematic illustration (not to scale) showing an image by a camera on the aircraft;

Figure 6 is a schematic illustration (not to scale) showing a noise image produced by a processor on the aircraft; and

Figure 7 is a schematic illustration (not to scale) of a processed image.

DETAILED DESCRIPTION

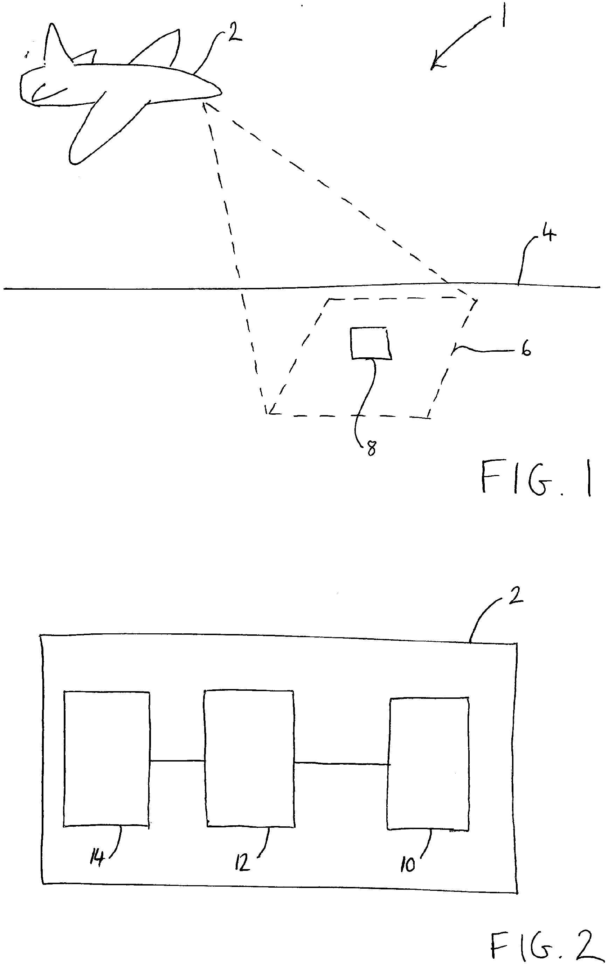

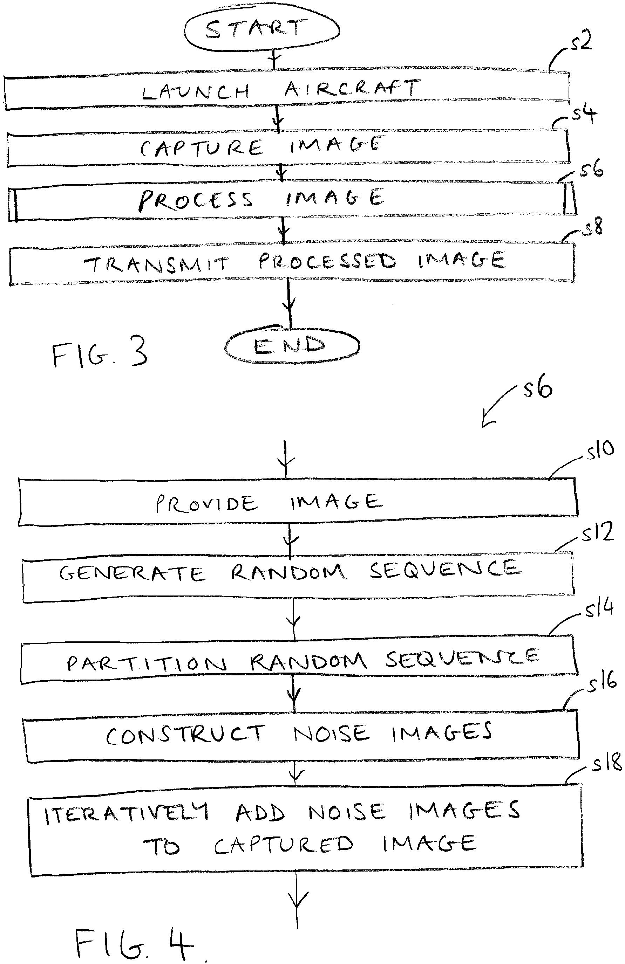

Figure 1 is a schematic illustration (not to scale) of a scenario 1 in which an aircraft 2 is used to implement an embodiment of a method of capturing and processing images.
In this embodiment, the aircraft 2 is an unmanned aircraft.
In this scenario 1, the aircraft 2 flies over an area of terrain 4. As the aircraft 2 flies over the area of terrain 4, the aircraft 2 captures images of a region of interest 6 as described in more detail later below with reference to Figure 2. An object of interest 8 is located within the region of interest 6.
Figure 2 is a schematic illustration (not to scale) of the aircraft 2.
In this embodiment, the aircraft 2 comprises a camera 10, a processor 12, and a transceiver 14.
The camera 10 is arranged to capture an image of the region of interest 6 of the area of terrain 4 as the aircraft 2 flies above the area of terrain 4. The camera 10 is configured to capture 2-dimensional image data. The camera 10 is configured to capture video image and/or single still images. The camera 10 measures an intensity of electromagnetic radiation reflected by or emitted from objects/terrain features in the area of terrain 4. Example sensors for the camera 10 include, but are not limited to, a visible light detecting camera configured to detect, for example, sunlight reflected by objects/terrain features in the area of terrain 4, an infrared camera configured to capture infrared radiation reflected or emitted by objects/terrain features in the area of terrain 4, and an ultraviolet camera.
In this embodiment, the camera 10 is connected to the processor 12 such that, in operation, images captured by the camera 10 are sent to the processor 12.
In this embodiment, the processor 12 is configured to process image data received from the camera 10 as described in more detail later below with reference to Figure 3. The processor 12 is connected to the transceiver 14 such that, in operation, the processor 12 sends an output to the transceiver 14.
The transceiver 14 is configured to send the information received from the processor 12, from the aircraft 2, to an entity remote from the aircraft 2, for example, a different aircraft or a ground station.
Apparatus, including the processor 12, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.
Figure 3 is a process flow chart showing certain steps of a process in which an embodiment of a method of capturing and processing images is performed.
At step s2, the aircraft 2 takes-off or launches, for example, from a ground station.
At step s4, as the aircraft 2 flies over the area of terrain 4, the camera 10 captures an image of the region of interest 6.

In this embodiment, measurements taken by the camera 10 are subject to noise. Thus, the image captured by the camera 10 contains noise, i.e. the image is noisy. The noise within the captured image may be stochastic noise. Noise within the captured image may be a result of any appropriate noise cause. For example, the noise may be an artefact of the system used to capture the image, store the image, and/or transfer the image from the camera 10 to the processor 12. Noise within the image may include, but is not limited to, image blur, glare, and/or the presence of objects/features in the images that are of no interest (e.g. rocks and boulders, foliage, etc.).

In this embodiment, underlying structure within the captured images (e.g. the structure of the object of interest 8) is, at least to some extent, hidden within image noise.

The image captured at step s4 is sent from the camera 10 to the processor 12.

At step s6, the processor 12 processes the image captured by the camera 10.

The processor 10 repeatedly adds a stochastic signal (i.e. random noise) to the image. An example way in which the processor 12 may add random noise, again and again, to the image is described in more detail later below with reference to Figures 4 to 6.

The repeated addition of random noise to the image advantageously tends to increase the visibility of the object of interest 8 in the image.

After processing the image, the processor 12 sends the processed image to the transceiver 14.

At step s8, the transceiver 14 transmits, from the aircraft 2, for use by an entity remote from the aircraft 2, the processed image.

Thus, a method of capturing and processing images is provided.

Returning now to the description of step s6, Figure 4 is a process flow chart showing certain steps of an example image processing method performed by the processor 12.

At step s10, the image is provided.

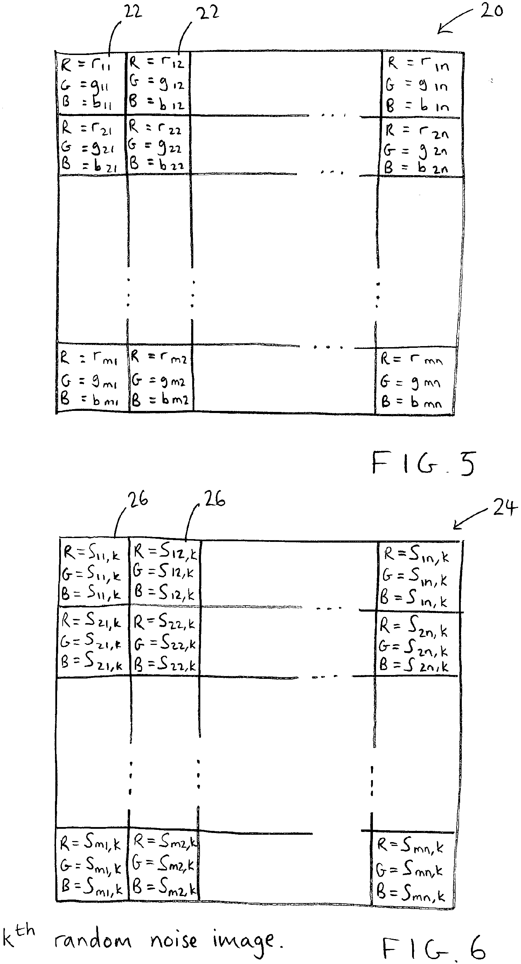

Figure 5 is a schematic illustration (not to scale) showing the image 20 captured by the camera 10 at step s4.

In this embodiment, the image 20 comprises a plurality of pixels 22 arranged as an m x $n$ matrix of pixels 22.

In this embodiment, the image 20 is in a red-green-blue (RGB) format, i.e. each pixel 22 in the image 20 is assigned a coordinate [R, G, B] representative of its colour in the RGB colour space. In particular, the pixel 22 in the $i$th row and $j$th column of the image 20 has the coordinate [$r_{ij}$, $g_{ij}$, $b_{ij}$] in the RGB colour space.

At step s12, the processor 12 generates a stochastic signal S (for example, a pseudorandom signal) of length m x $n$ x C, where C is a predetermined constant value. In this embodiment, the signal S is a random (e.g. pseudorandom) sequence comprising m x $n$ x C values. Preferably, C is greater than or equal to 20. The constant C is the number of noise signals that are to be added to the image 20.

Pseudo-random sequences random sequences that tend to be capable of being computed with the certainty of randomness, for example, if they are used in the following manner: if 100 random sequences of 100 random bits are to be generated, then a pseudo-random sequence of 10,000 bits is generated and subsequently divided into 100 sequences of 100 bits.

In some embodiments, the value of $\pi$ is used to produce a pseudorandom signal. For example, the stochastic signal S generated at step s12 may comprise the first $m$ x $n$ x $C$ digits of $\pi$.

In this embodiment, the generated signal S is an amplitude modulated signal. Also, the signal S is a bipolar random signal. Also, the signal S has an average value (e.g. average amplitude over time) of zero.

The signal S may be expressed as a sequence of random (e.g. pseudorandom) values $S_{ij,k}$, where $i = 1, ...,m$; $j = 1, ..., n$; and k = 1, ...C, i.e.:

$$S = [S_{11,1}, S_{12,1}, \ldots, S_{mn,1}, S_{11,2}, S_{12,2}, \ldots, S_{mn,2}, \ldots, S_{11,C}, S_{12,C}, \ldots, S_{mn,C}]$$

At step s14, the processor 12 segments the generated signal S into C sequential segments, each segment containing m x $n$ values. For example, the signal S may be segmented as follows:

$$[S_{11,1}, S_{12,1}, ..., S_{mn,1}];$$

$$[S_{11,2}, S_{12,2}, ..., S_{mn,2}];$$

$$...$$

$$[S_{11,C}, S_{12,C}, ..., S_{mn,C}].$$

At step s16, using the segmented signal S, the processor 12 constructs C "noise images".

In this embodiment, each of the C segments of the signal S comprises m x n random or pseudorandom values $S_{ij,k}$. For each of the C segments of the signal S, a noise image is constructed by assigning each of the m x n values $S_{ij,k}$ to a respective pixel of an m x n (noise) image. The value $S_{ij,k}$ assigned to a pixel of the noise image defines the red, green, and blue (RGB) coordinate of that pixel.

Figure 6 is a schematic illustration (not to scale) showing a noise image 24 produced by the processor 12 at step s16.

The noise image 24 shown in Figure 6 is the kth noise image 24, i.e. the noise image corresponding to the kth segment of the signal S. The noise image 24 comprises a plurality of further pixels 26 arranged as an m x *n* matrix of pixels 26. The noise image 24 is in a red-green-blue (RGB) format, i.e. each further pixel 26 in the noise image 24 is assigned an [R, G, B] coordinate. In particular, the further pixel 26 in the *i*th row and *j*th column of the kth noise image 24 has the RGB coordinate [$S_{ij,k}$, $S_{ij,k}$, $S_{ij,k}$] in the RGB colour space.

Thus, the processor 12 generates C noise images, i.e. a noise image for each k = 1,..., C.

At step s18, the processor repeatedly adds (i.e. one after the other) the C noise images 24 to the image 20.

In this embodiment, a noise image 24 is added to the image 20 by, for each pixel 22 in the image 20, adding, to the RGB coordinates of that pixel 22, the RGB coordinates of corresponding further pixel 26 in that noise image 24.

Thus, if the kth noise image 24 was added to the image 20, the RGB coordinates of the pixel 22 in the ith row and jth column of the image 20 would be [$r_{ij}$ + $S_{ij,k}$, $g_{ij}$ + $S_{ij,k}$, *bij* + $S_{ij,k}$].

The repeated addition of the C noise images 24, one after the other, to the image 20 produces the processed image.

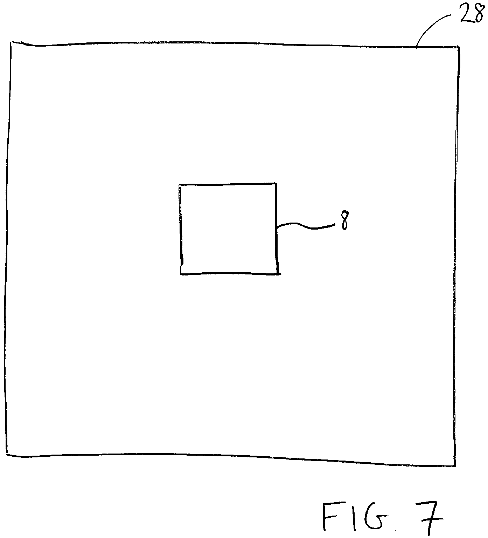

Figure 7 is a schematic illustration (not to scale) of the processed image 28. Advantageously, the repeated addition of the C noise images 24 tends to cancel out, at least to some extent, the noise present within the original image 20. Thus, the object of interest 8 tends to be more prominent (i.e. visible or discernible) in the processed image 28 compared to in the original image 20.

Thus, an example image processing method is provided.

The above described method and apparatus advantageously tends to improve the signal to noise ratio of a measured signal. The above described method and apparatus advantageously tends to allow for improved object detection, object identification, object classification, object tracking, and the like.

The above described method tends to be relatively quick and efficient (e.g. in terms of computing power) compared to many conventional processes.

Advantageously, pseudorandom signals tend to be easy to generate. Furthermore, as mentioned above, pseudorandom signals tend to provide certainty of randomness.

Advantageously, the above described system and method tends to be useable to facilitate information transfer (e.g. two-way communication) in "busy" bandwidths, by reducing undesirable noise in a measured signal.

A further advantage of using pseudorandom signals is that they tend to be reproducible. This tends to allow the process to be repeated and checked. This also tends to provide a degree of process validation.

It should be noted that certain of the process steps depicted in the flowchart of Figures 3 and 4 and described above may be omitted or such process steps may be performed in differing order to that presented above and shown in Figures 3 and 4. Furthermore, although all the process steps have, for convenience and ease of understanding, been depicted as discrete temporally-sequential steps, nevertheless some of the process steps may in fact be performed simultaneously or at least overlapping to some extent temporally.

In this embodiment, the data processing method is implemented in the scenario described in more detail earlier above with reference to Figure 1. However, in other embodiments, the data processing method is implemented in a different scenario, which may include one or more entities instead of or in addition to one or more of the entities described above and shown in Figure 1.

In the above embodiments, images are captured by an aircraft. Also, the image are processed on the aircraft.

However, in other embodiments, images may be captured by a different entity, for example, a different type of vehicle such as a land-based or water-based vehicle. In some embodiments, the images may be processed remotely from the vehicle, for example at a ground station. In some embodiments, processing of the image data may be distributed across multiple remote entities.

In the above embodiments, the camera is a sensor configured to measure electromagnetic radiation. However, in other embodiments, a different type of sensor is used, for example, a range sensor (such as LIDAR), a radar system (such as a ground penetrating radar), or an acoustic sensor. In some embodiments, multiple sensors may be used. Image data from multiple sensors may be processed independently, or may be combined before or after the above described noise addition process is performed.

In the above embodiments, the data captured by the camera is 2-dimensional image data. However, in other embodiments the data may be a different type of data. For example, in some embodiments, the data is 1-dimensional or 3-dimensional. In some embodiments, data other than image data is captured and processed.

In the above embodiments, the random signal S comprises a plurality of discrete random values. The signal S may be a digital signal. The signal S may be generated digitally, or may be a digital representation of an analogue signal. However, in other embodiments the random signal S may be a continuous signal. In such embodiments, the signal S may be an analogue representation of digital data.

In the above embodiments, the random or pseudorandom signal is a bipolar random signal that has a mean of zero. However, in other embodiments, the signal S has a different form. For example, the signal S may be a positive signal (i.e. define positive noise). In such embodiments, the image processing method may further comprises subtracting an average value of the added noise from each of the pixels in the image, e.g. after the random noise images have been added.

In the above embodiments, in each noise image, the values of the R, G, and B coordinates of a given further pixel in that noise image are equal to each other. The R, G, and B channels for the image data are independent from each other. Thus, having values of the R, G, and B coordinates of a further pixel in the noise image be equal to each other tends not to be detrimental to the noise reducing effect of the process. Having values of the R, G, and B coordinates of a further pixel in the noise image tends to provide for reduced computing power compared to if those R, G, and B coordinates were not equal, for example, as a shorter random signal S may be generated. Nevertheless, in some embodiments the R, G, and B coordinates of one or more of the further pixels in one or more of the noise images are not all equal. For example, in some embodiments, a further random signal S' of length 3 x m x $n$ x C may be generated. This signal S' may be segmented into C segments, each containing 3 x m x $n$ values. Each further pixel of each $m$ x $n$ noise image may then be assigned 3 random values, which may define the RGB coordinates of that further pixel.

In the above embodiments, the noise images are added to the original captured image repeatedly, i.e. one after the other. However, in other embodiments the noise images may be added to the image in a different way.

In the above embodiments, C noise images are added to the captured image. Preferably, C is greater than or equal to twenty. In some embodiments, the value of C may be determined based upon a signal to noise ratio of the measured signal/image, i.e. C = f(SNR). For example, the higher the signal to noise ratio of the measured signal, the lower the value of C. In some embodiments, the value of C may be determined based upon a desired level of signal-noise differentiation.

In this embodiment, random noise is added to the captured image as a plurality of noise images. However, in other embodiments, random noise may be added to the image in a different way. For example, in some embodiments, random noise is added to the image in a raster scanning pattern, e.g. line by line moving from left to right in the image, or column by column moving from top to bottom in the image.

**Claims**

1.  A method of processing an input signal (20), the method comprising adding, to the input signal (20), a plurality of stochastic noise signals (24) so as to produce an output signal (28).

2.  A method according to claim 1, further comprising measuring a parameter of a system, thereby providing the input signal (20).

3.  A method according to claim 1 or 2, wherein the stochastic noise signals (24) are successively added to the input signal (20).

4.  A method according to any of claims 1 to 3, wherein
    the method further comprises determining a value of a function of a signal to noise ratio of the input signal (20); and
    the number of stochastic noise signals (24) in the plurality is equal to the determined value.

**5.** A method according to any of claims 1 to 4, wherein the stochastic noise signals (24) are pseudorandom signals.

**6.** A method according to any of claims 1 to 5, the method further comprising generating the plurality of stochastic noise signals (24).

**7.** A method according to claim 6, wherein generating the plurality of stochastic noise signals (24) comprises:

generating a stochastic signal having a length greater than or equal to a length of the input signal (20) multiplied by the number of stochastic noise signals (24) in the plurality; and
segmenting the stochastic signal into a plurality of segments, thereby providing the plurality of stochastic noise signals (24).

**8.** A method according to any of claims 1 to 7, wherein the stochastic noise signals (24) are bipolar stochastic signals having zero means.

**9.** A method according to any of claims 1 to 8, wherein
the input signal (20) comprises an image (20) having a first plurality of pixels (22);
each stochastic noise signal (24) is a further image (24) comprising a second plurality of pixels (26); and
the number of pixels (26) in the second plurality is greater or equal to the number of pixels (22) in the first plurality.

**10.** A method according to claim 9, wherein adding a stochastic noise signal (24) to the input signal (20) comprises superimposing a noise image (24) onto the input signal image (20).

**11.** A method according to and of claims 1 to 10, wherein:

the input signal (20) comprises an image (20) including image data from a plurality of independent channels (R, G, B); and
adding a stochastic noise signal (24) to the input signal (20) comprises, for a pixel (22) in the image (20), adding a common noise value to each channel value of that pixel (22).

**12.** Apparatus for processing an input signal (20), the apparatus comprising a signal processor (12) configured to add, to the input signal (20), a plurality of stochastic noise signals (24) so as to produce an output signal (28).

**13.** An aircraft (2) comprising apparatus according to claim 12.

**14.** A program or plurality of programs arranged such that when executed by a computer system or one or more processors it/they cause the computer system or the one or more processors to operate in accordance with the method of any of claims 1 to 11.

**15.** A machine readable storage medium storing a program or at least one of the plurality of programs according to claim 14.

FIG. 1

FIG. 2

START

LAUNCH AIRCRAFT — s2

CAPTURE IMAGE — s4

PROCESS IMAGE — s6

TRANSMIT PROCESSED IMAGE — s8

END

FIG. 3

s6

PROVIDE IMAGE — s10

GENERATE RANDOM SEQUENCE — s12

PARTITION RANDOM SEQUENCE — s14

CONSTRUCT NOISE IMAGES — s16

ITERATIVELY ADD NOISE IMAGES TO CAPTURED IMAGE — s18

FIG. 4.

22  22                                    20

| R = $r_{11}$ <br> G = $g_{11}$ <br> B = $b_{11}$ | R = $r_{12}$ <br> G = $g_{12}$ <br> B = $b_{12}$ | | ... | R = $r_{1n}$ <br> G = $g_{1n}$ <br> B = $b_{1n}$ |
| R = $r_{21}$ <br> G = $g_{21}$ <br> B = $b_{21}$ | R = $r_{22}$ <br> G = $g_{22}$ <br> B = $b_{22}$ | | ... | R = $r_{2n}$ <br> G = $g_{2n}$ <br> B = $b_{2n}$ |
| ⋮ | ⋮ | | ... | ⋮ |
| R = $r_{m1}$ <br> G = $g_{m1}$ <br> B = $b_{m1}$ | R = $r_{m2}$ <br> G = $g_{m2}$ <br> B = $b_{m2}$ | | | R = $r_{mn}$ <br> G = $g_{mn}$ <br> B = $b_{mn}$ |

FIG. 5

26  26                                    24

| R = $S_{11,k}$ <br> G = $S_{11,k}$ <br> B = $S_{11,k}$ | R = $S_{12,k}$ <br> G = $S_{12,k}$ <br> B = $S_{12,k}$ | | ... | R = $S_{1n,k}$ <br> G = $S_{1n,k}$ <br> B = $S_{1n,k}$ |
| R = $S_{21,k}$ <br> G = $S_{21,k}$ <br> B = $S_{21,k}$ | R = $S_{22,k}$ <br> G = $S_{22,k}$ <br> B = $S_{22,k}$ | | ... | R = $S_{2n,k}$ <br> G = $S_{2n,k}$ <br> B = $S_{2n,k}$ |
| ⋮ | ⋮ | | | ⋮ |
| R = $S_{m1,k}$ <br> G = $S_{m1,k}$ <br> B = $S_{m1,k}$ | R = $S_{m2,k}$ <br> G = $S_{m2,k}$ <br> B = $S_{m2,k}$ | | | R = $S_{mn,k}$ <br> G = $S_{mn,k}$ <br> B = $S_{mn,k}$ |

$k^{th}$ random noise image.

FIG. 6

28

8

FIG 7

Europäisches
Patentamt

European
Patent Office

Office européen
des brevets

# EUROPEAN SEARCH REPORT

Application Number

EP 15 27 5130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/169051 A1 (PENG RENBIN [US] ET AL) 1 July 2010 (2010-07-01) * abstract; figures 10,11 * * paragraph [0005] - paragraph [0020] * * paragraph [0037] - paragraph [0232] * ----- | 1-15 | INV. G06T5/00 |
| A | WO 2007/087702 A1 (CANADIAN SPACE AGENCY [CA]; QIAN SHEN-EN [CA]; OTHMAN HISHAM [CA]) 9 August 2007 (2007-08-09) * abstract; figures 1,3,8 * * paragraph [0003] - paragraph [0014] * * paragraph [0016] - paragraph [0078] * ----- | 1-15 | |
| A | CN 102 915 528 B (UNIV HANGZHOU DIANZI) 18 February 2015 (2015-02-18) * the whole document * ----- | 1-15 | |
| A | US 6 025 922 A (MARSDEN JONATHAN [US]) 15 February 2000 (2000-02-15) * abstract; figures 1-4 * * column 1, line 12 - column 4, line 16 * ----- | 1-15 | TECHNICAL FIELDS SEARCHED (IPC) G06T |

The present search report has been drawn up for all claims

| Place of search | Date of completion of the search | Examiner |
|---|---|---|
| Munich | 12 October 2015 | Herter, Jochen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&.......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 27 5130

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2015

| Patent document cited in search report | | Publication date | Patent family member(s) | | Publication date |
|---|---|---|---|---|---|
| US 2010169051 | A1 | 01-07-2010 | NONE | | |
| WO 2007087702 | A1 | 09-08-2007 | AT | 513277 T | 15-07-2011 |
| | | | CA | 2640683 A1 | 09-08-2007 |
| | | | EP | 1982305 A1 | 22-10-2008 |
| | | | US | 2011170796 A1 | 14-07-2011 |
| | | | WO | 2007087702 A1 | 09-08-2007 |
| CN 102915528 | B | 18-02-2015 | NONE | | |
| US 6025922 | A | 15-02-2000 | AU | 753502 B2 | 17-10-2002 |
| | | | AU | 2347400 A | 12-07-2000 |
| | | | EP | 1142300 A1 | 10-10-2001 |
| | | | US | 6025922 A | 15-02-2000 |
| | | | WO | 0038407 A1 | 29-06-2000 |

For more details about this annex : see Official Journal of the European Patent Office, No. 12/82